# EUROPEAN PATENT APPLICATION

(11) **EP 1 247 879 A2**
(43) Date of publication of application: **09.10.2002**
(21) Application number: 02007465.4
(22) Date of filing: 30.03.2002
(51) Int. Cl.: C23C 30/00, B23B 27/14

(54) **Tool for turning of titanium alloys**

(30) Priority: 05.04.2001 SE 0101241
(71) Applicant: SANDVIK AKTIEBOLAG, 811 81 Sandviken (SE)
(72) Inventor: Hessman, Ingemar, 811 54 Sandviken (SE); Olsson, Björn, 141 71 Huddinge (SE); Petersson, Carl-Göran, 437 32 Lindome (SE)
(74) Representative: Taquist, Lennart

(57) **Abstract**

An insert for turning of titanium is provided. By using inserts with a reduced length of primary land compared to prior art an unexpected increase in tool life and productivity has been obtained. Said positive results are further improved by subjecting the inserts to an additional heat treatment after grinding to final shape and dimension.

## Description

The present invention relates generally to turning of components of titanium alloys. More particularly, the present invention relates to using inserts with reduced contact length and with an additional heat treatment resulting in an unexpected increase in tool life and in productivity.

Modern high efficiency engines for aircrafts and gas turbines are made of titanium based alloys. Such alloys are generally divided into three groups often referred to as alpha, alpha+beta and beta alloys. Alloying elements such as Al, V, Sn stabilise the various types of alloys and modify their properties.

Uncoated cemented carbide is normally used for the machining of titanium alloys because such uncoated cemented carbides prevent contamination of the titanium alloy component, provide wear resistance, toughness and good high temperature properties. A cemented carbide with about 6% Co and rest WC with a grain size of 1-2 µm is considered to be the optimum material for machining of titanium alloys. Wet machining is used in order to minimise the generation of heat, thereby increasing the tool life. Dry machining often results in shorter tool life compared to wet machining.

Normal cutting data are:
Geometry: Round inserts with about 20 mm diameter.
Cutting speed = 40-60 m/min
Feed rate = 0.3-0.4 mm
Depth of cut = 0.5-10.0 mm

Length of primary land as defined in US 5,897,272 : 1-2 times feed rate depending on deformation conditions of the material being machined.

Typical wear mechanisms are uneven flank wear, chipping of the edge, notch wear and built-up edge, all leading to a bad surface finish of the turned component and failure of the cutting edge. The main reason for tool change is risk of tool breakdown and damage to the turned component.

It is an object of the present invention to develop tool solutions with a longer tool lives and less frequent tool changes.

It has now surprisingly been found that wet, high-pressure coolant machining using an uncoated cemented carbide cutting tool provided with a particular length of its primary land preferably having an additional heat treatment provides longer tool life and increased productivity. The problem with the dominating discontinuous wear mechanisms like uneven flank wear, chipping of edge have been found to be strongly reduced.

The present invention relates to turning of titanium based alloys such as the alpha or alpha+beta type, for example, Ti₆Al₄V, with coolant and preferably with high pressure coolant under the following conditions:
Geometry = Round insert diameter 10-25 mm, preferably diameter 20 mm
Length of primary land, mm: = 0.05-0.25, preferably 0.1-0.20, most preferably 0.12
Angle of primary land, °= -20 - +10, preferably -10 - 0, most preferably -10
Speed = 50-150, preferably 80-100 m/min
Feed = 0.2-0.7, preferably 0.30-0.60 mm
Depth of cut = 0.5-10 mm preferably 3-6 mm
Max-chip thickness, preferably 0.3-0.5 mm
Coolant with pressure 100-500 bar, preferably 200-400 bar.

The cemented carbide cutting tool insert consists of or comprises 5-7 wt-% Co and remainder WC with an average grain size of 1-2 µm. At least the functioning parts of the insert surface, preferably >50 %, more preferably >75 %, most preferably all of the insert surface is covered with a thin 0.5-8 µm, preferably 2-5 µm, most preferably about 3 µm Co-layer.

The present invention also relates to a method of making a cemented carbide cutting tool inserts for turning of titanium alloys consisting of or comprising 5-7 wt-% Co and rest WC. After grinding to final shape and dimensions the inserts are heat treated at 1375-1425 °C for 0.5-1.5 h, preferably 0.5-1 h in an atmosphere of Ar+25-50% CO at a total pressure of 50-100 mbar. The cooling rate to below 1250°C shall be 4-5°C/min.

### Example

A. Cutting tool inserts similar to Coromant H10A of style RCGT 200600 containing 6 wt-% Co and rest WC with a grain size of 1-2 µm were ground to final dimensions and after that subjected to a heat treatment at 1400°C for 45 min. in an atmosphere of Ar+20% CO at a total pressure of 60 mbar. The cooling rate to below 1250 °C was 4.5 °C/min. The insert surface was to 80 % covered with a 3 µm Co-layer. (invention)

### B. Same as A but without heat treatment

Inserts A and B were used for turning of a Ti₆Al₄V-component under the following conditions:

| | |
|---|---|
| Operation | Semiroughing |
| Cutting speed | See table below. |
| Feed | 0.7 mm/rev |
| Depth of cut | 4 mm |
| Max chip thickness | 0.36 mm |

Ultra high pressure coolant at 400 bar
Tool life/insert is shown in the table
Tool life criterion: Unacceptable surface finish and risk for tool break down.
Tool life/insert, min

| Insert | A | B | B |
|---|---|---|---|
| Length of primary land, mm | 0.12 | 0.12 | 0.7 |
| Angle of primary land, ° | -10 | -10 | -10 |
| 60 m/min | 12 | 10 | 7 |
| 80 m/min | 10 | 8 | 6 |
| 100 m/min | 8 | 6 | 4 |

### Conclusions

Cemented carbide cutting tool inserts with reduced length of the primary length gives a longer tool life, which is further improved with an additional heat treatment of the inserts after grinding to final dimension. Thus a higher productivity is achieved with less problems in production and less frequent changes of tools.

## Claims

1. Cemented carbide cutting tool insert for turning of titanium alloys consisting of 5-7 wt-% Co and remainder WC **characterised in** the surface of said insert is at least partly, preferably >50 %, covered with a thin 0.5-8 µm layer of Co.

2. Method of making a cemented carbide cutting tool insert for turning of titanium alloys consisting of 5-7 wt-% Co and remainder WC **characterised in** heat treating the insert after sintering and grinding to final shape and dimensions at 1375-1425 °C for 0.5-1.5 h, preferably 0.5-1 h in an atmosphere of Ar+25-50 % CO at a total pressure of 50-100 mbar and cooling to below 1250 °C with a rate of 4-5 °C/min.

3. Method of turning titanium alloys using cemented carbide cutting tool insert consisting of 5-7 wt-% Co and remainder WC **characterised in** the following conditions:
Length of primary land: = 0.05-0.25 mm
Angle of primary land = -20° - +10°
Cutting speed: 50-150 m/min
Feed rate: 0.3-0.6 mm and
Cutting depth: 0.5-10 mm.

4. Method according to claim 3 **characterised in** using a coolant with a pressure of 100-500 bar, preferably 200-400 bar.
